# EUROPEAN PATENT APPLICATION

(11) **EP 2 551 877 A1**
(43) Date of publication of application: **30.01.2013**
(21) Application number: 10848310.8
(22) Date of filing: 24.03.2010
(51) Int. Cl.: H01H 33/66, H02B 13/02

(54) **VACUUM VALVE AND SWITCHGEAR EQUIPPED WITH SAID VACUUM VALVE**

(71) Applicant: Hitachi, Ltd., Chiyoda-ku Tokyo 100-8280 (JP)
(72) Inventor: MORITA, Ayumu, Hitachi-shi Ibaraki 316-8501 (JP); TSUCHIYA, Kenji, Hitachi-shi Ibaraki 316-8501 (JP)
(86) International application number: PCT/JP2010/002044
(87) International publication number: WO 2011/117914

(57) **Abstract**

The object of the present invention is to provide a vacuum valve with strength against buckling deformation and without pressure leakage.

A vacuum valve 1 comprising a fixed electrode 4 and a movable electrode 5 facing each other; a vacuum container containing the fixed electrode and the movable electrode and the interior thereof being in a vacuum state; and a bellows 2 forming a border between the inside and the outside of the vacuum container, for enabling the connecting and disconnecting movement of the movable electrode 5 using an elastic force generated by a plurality of pleated structure while maintaining the vacuum pressure inside the container, wherein the bellows 2 has a region without pleats or a region with low pleats.

## Description

### {Technical Field}

The present invention relates to a vacuum valve and a switchgear in which there is a pressure difference between the internal pressure and the surrounding pressure of the vacuum valve.

### {Background Art}

A vacuum valve takes advantage of a high insulating capacity of vacuum to constitute a device for allowing or interrupting current in the state of vacuum insulation. In order to make or interrupt current while maintaining a high vacuum state in the valve, the vacuum valve is provided with an expandable bellows in a movable side, which allows movement in the movable side while the valve is hermetically sealed. In other words, the bellows is applied with force corresponding to a pressure difference between the high vacuum state in the vacuum valve and the surroundings of the valve. Thus, in order for the bellows to continue working normally, its form needs to be maintained against the force corresponding to the pressure difference.

When, for example, a rated voltage of 72 kV or 145 kV, which is high voltage, is applied, a long distance is required between electrodes for interruption, which means the electrode in the movable side needs to travel a long distance, and consequently, the bellows also need to be long. In such a case, a large force is applied near the center of the bellows, possibly deforming the center region into a "dogleg" shape; this is called buckling deformation. Once the bellows is deformed by the buckling deformation, the expanding/contracting movement of the bellows will be restrained, affecting the operation of making/interrupting current.

As a technology for preventing the buckling deformation, for example, patent literature 1 can be found.

The patent literature 1 describes equipping a vacuum switch tube with a bellows whose thickness in a center portion in the expanding/contracting direction is thicker than the thickness of adjacent portions.

### {Citation List}

### {Patent Literature}

(Patent Literature 1}
Japanese Patent Laid-open No. Sho 60(1985)-65955 {Summary of Invention}

### {Technical Problem}

However, in order to manufacture the structure of the bellows described in the patent literature 1, adjoining portions including the thick portion and the thin portion need to be each made before joining them for assembly, and the joint may cause pressure leakage due to pressure difference between the internal and the external pressures of the bellows.

It is an object of the present invention to provide a vacuum valve that has strength against buckling deformation and prevents pressure leakage.

### {Solution to Problem}

A vacuum valve according to the present invention to solve this problem is provided with a fixed electrode and a movable electrode facing each other; a vacuum container containing the fixed electrode and the movable electrode, the interior of the container being in a vacuum state; and a bellows having a pleated structure that enables the movement of the movable electrode while maintaining the vacuum state inside the vacuum container; wherein the bellows has a region without pleats or a region with low pleats.

### {Advantageous Effects of Invention}

According to the vacuum valve of the present invention, the valve has strength against buckling deformation and can prevent pressure leakage.

### {Brief Description of Drawings}

Figure 1 shows an axial sectional view of a vacuum valve according to a first embodiment.
Figure 2 shows an axial sectional view of a vacuum valve according to a second embodiment.
Figure 3 shows a side sectional view of gas-insulated switchgear according to a third embodiment.

### {Description of Embodiments}

Embodiments of the present invention will be described below.

### {Embodiment 1}

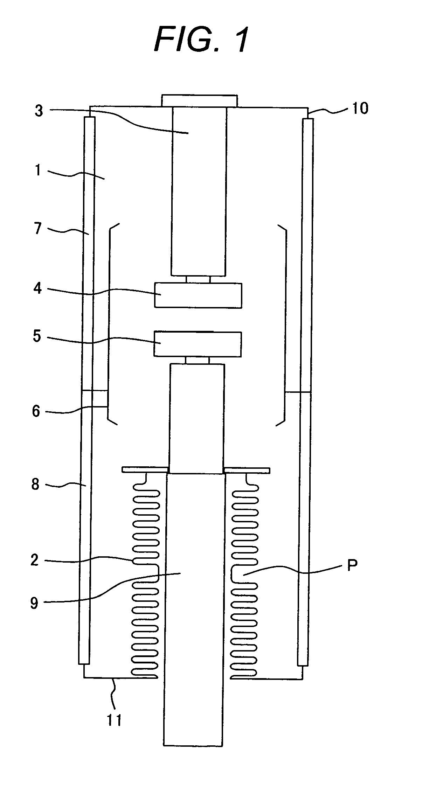

The present embodiment will be described with reference to Fig. 1. A vacuum valve 1 according to the present embodiment has a vacuum container, the interior of which is in a vacuum state; stored in the vacuum container are a fixed electrode 4 and a movable electrode 5, which are opposing contact electrodes; a fixed conductor 3 connected to the fixed electrode 4; a movable conductor 9 connected to the movable electrode 5; a bellows 2 disposed in the inner side of the vacuum container, which is a flexible member for enabling the movement of the movable conductor 9 while maintaining the vacuum state in the vacuum container; and an arc shield 6 for preventing arcs sparked between the electrodes from flying to the vacuum container at the time of connecting or disconnecting the electrodes. The vacuum container itself is made up by joining cylindrical ceramic insulating tubes 7 and 8, and end portions of the container are joined to metal end plates (a fixed side end plate 10 and a movable side end plate 11) to be sealed. In the movable side, since not only the vacuum container needs to be sealed to keep the vacuum state but also the movement of the movable conductor 9 needs to be allowed, the bellows 2 is joined with the edge of the movable side end plate 11 opposite to the edge joined with the insulating tube 8, and the movable conductor 9 is joined with the end of the bellows 2 opposite to the end joined with the movable side end plate 11. This allows the movable electrode 5 connected to the movable conductor 9 to move to perform connecting/disconnecting operations while maintaining the vacuum state in the vacuum container.

The bellows 2 is formed with a cuplike metal member having a plurality of pleated side wall surface, but the bellows 2 in the present embodiment, in particular, is provided with a flat portion P without any pleats in the center region of the side wall surface of the bellows 2.

A manufacturing method of the bellows 2 will be described. A thin cuplike metal, which is a base of the bellows 2, is set inside a mold having a plurality of pleated side surface, and high-pressure liquid is injected into the cup. This adds pressure to the thin cuplike metal from inside and the thin cuplike metal is partially stretched due to its ductility to fit into the plurality of pleated mold, forming the plurality of pleats on the side surface to complete the bellows 2.

In the bellows 2 manufactured by this method, the thickness of a stretched portion is thin while an unstretched portion is thicker than the stretched portion since the unstretched portion has a thickness of a sidewall surface of the original cuplike metal.

Buckling will be described. When a vacuum valve is used, there is a large pressure difference between the interior and the surroundings of the valve, so that the bellows 2 is applied with stress corresponding to the pressure difference. The closer to the center and further away from the end portion where the bellows 2 is fixed, the harder to resist against the stress and the easier to deform into a "dogleg" shape. This is a phenomenon called buckling deformation. The pleats include portions expanding toward the inner side of the vacuum valve and portions expanding toward the perimeter side of the valve. Among these, the portions expanding toward the inner side of the vacuum valve are more susceptible to buckling deformation. A medium, such as gas surrounding the vacuum valve, enters into the portions expanding toward the inner side of the valve, but since the pressure of the medium is greater than the vacuum pressure of the valve interior, force is added in the expanding direction of the pleats already expanded. Thus, the above-mentioned portions are likely to be buckled. The buckling is plastic deformation, so that once happened, the bellows 2 cannot return to its original shape, which hinders the movable conductor 9 to move normally. This is a big problem. This buckling phenomenon is more likely to occur when the rated voltage is high such as 72 kV or 145 kV, for example, in which case the distance between the electrodes is long at the time of current disconnection and the length of the bellows 2 is long at the time of connection; additionally, the bucking is easier to occur when high-pressure air or high-pressure gas is filled around the vacuum valve 1 to increase the dielectric strength of the surroundings of the valve. The former is based on an increase in the length from the end portions to the center portion of the bellows 2 reducing the resistance against stress, and the latter is based on an increase in the pressure difference between the internal and the external pressures of the vacuum valve 1 increasing the stress itself added to the bellows 2. Thus, while taking measures against buckling is basically necessary under any conditions when a vacuum valve is used, in these conditions particularly countermeasures against buckling will be important.

In addition to the above, countermeasures against buckling are necessary when the bellows 2 is disposed in the inner side of the vacuum container such as in the present embodiment. This is because: when the bellows 2 is disposed to the outer side of the vacuum container, the external pressure of the vacuum valve 1 pushes the expanding portions to give reactive force in the direction of restoring the bellows 2, but in contrast, when the bellows 2 is disposed in the inner side of the vacuum container, the internal pressure of the vacuum valve 1 pushes the expanding portions to add force in the direction of buckling the bellows 2. Thus, buckling is easier to occur when the bellows 2 is disposed in the inner side of the vacuum container; consequently, countermeasures against the buckling will be important in this case also.

In the present embodiment, a flat portion P without pleats is provided to the side wall surface of the bellows 2, so that when the medium around the vacuum valve 1 pushes the bellows toward the inner side of the valve 1, it is merely that the flat portion P is pushed toward the inner side of the valve 1, meaning the rigidity against expanding force is strong. Thus, buckling originated at this portion is less likely to occur. In addition, not only that the flat portion itself is rigid but also that the flat portion is located near a rigid portion with pleats strong against expansion, so that the flat portion is more rigid compared to when no rigid portion is provided around it.

In the present embodiment, when a portion of the bellows is stretched into pleats, its rigidity is decreased since the thickness of the metal is reduced, but the rigidity of the portions not stretched into pleats is comparatively strong. The flat portion P without pleats is a portion continuously extending without pleats, so that the metal thickness is thick which makes the relative rigidity stronger. In other words, this flat portion is strengthened not only by having no pleats but also by being thick, thus it has considerable strength against buckling.

Furthermore, in the present embodiment, a flat portion P is provided near the center of the side surface portion. Since buckling tends to occur near the center as described above, providing the portion having high rigidity and strength against buckling to the concerned place is more effective compared to providing it to the other places.

### {Embodiment 2}

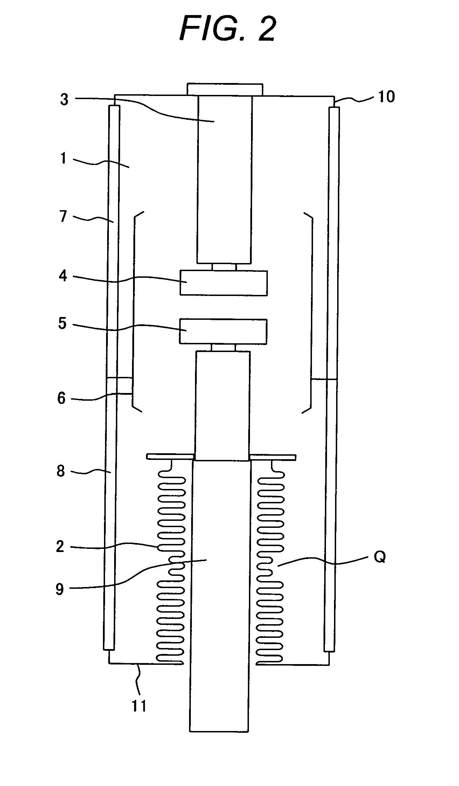

The present embodiment will be described with reference to Fig. 2. It is different from the Embodiment 1 in the structure of a bellows 22. While the Embodiment 1 describes providing the flat portion without pleats near the center of the side surface portion of the bellows 2, the bellows 22 in the present embodiment is provided with a portion Q having low pleats near the center of the side surface portion of the bellows 22.

In the present embodiment, unlike the Embodiment 1, the pleats are provided, so that a medium, such as gas surrounding the vacuum valve, enters into the portions expanding toward the inner side of the valve even if the pleats are low. Since the pressure of the medium is higher than the vacuum pressure of the interior of the vacuum valve, force is added in the direction of expanding the pleats already expanded.

However, since the heights of the pleats are comparatively lower than the other portions, its rigidity is higher, though not as much as the rigidity of the flat portion, compared to the other portions having higher pleats. So, the present embodiment also causes less buckling.

In addition, although the pleats are formed in the present embodiment, the extent of stretch of the pleats is less than the other portions having higher pleats, so that in the bellows 22 manufactured by the method described in the Embodiment 1, the metal thickness of the portion with lower pleats is thicker than that of the other portions with large pleats. This also helps to increase rigidity.

Furthermore, in the present embodiment, a portion Q having low pleats is provided near the center of the side surface portion in the same manner as in the Embodiment 1. Since buckling tends to occur near the center as described above, disposing the portion having high rigidity and strength against buckling to the concerned place is more effective compared to disposing it to the other places.

### {Embodiment 3}

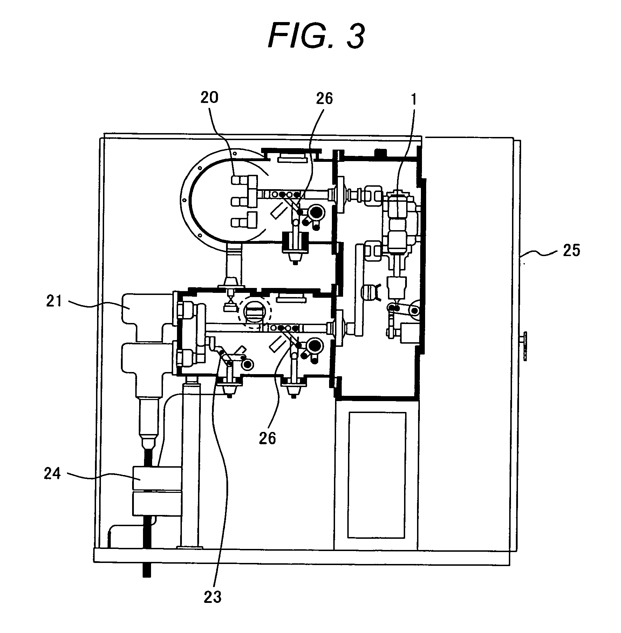

While only the vacuum valve 1 is described in each of the above embodiments, switchgear equipped with the vacuum valve is also included in the invention. In other words, the present invention includes switchgear having the above-described vacuum valve 1; further having a bus bar for supplying electricity to the vacuum valve 1 and a cable for supplying the electricity from the vacuum valve 1 to the load side. Gas-insulated switchgear according to the present embodiment will be described below with reference to Fig. 3. The present embodiment shows SF₆ gas-insulated switchgear 25 equipped with the above vacuum valve 1 as a specific embodiment. Besides the vacuum valve 1, the SF₆ gas-insulated switchgear 25 according to the present embodiment is roughly made up of a bus bar 20 for supplying electricity to the switchgear, a cable head 21 for supplying the electricity to the load side, disconnecting switches 26 disposed in the bus bar 20 side and in the cable head 21 side from the vacuum valve 1, a grounding switch 23 disposed to the load side of the disconnecting switch 26 for grounding the main circuit, and a CT 24 connected to the cable head 21 for measuring current running to the load side; and each conductor from the bus bar 20 in Fig. 3 to the cable head 21 is insulated by hermetically-sealed high-pressure SF₆ gas.

In this case, there is a large pressure difference between the interior of the vacuum valve and the surrounding high-pressure SF₆ gas compared to when the surroundings are at atmospheric pressure, so buckling is easier to occur. Thus, taking the above-described measures against bucking in the present embodiment is more effective compared to when the surroundings are at atmospheric pressure.

In the present embodiment, the SF₆ gas is used as high-pressure gas as an embodiment, but needless to say, the invention is not limited to the SF₆ gas. For example, the other gases with high-pressure in relation to atmospheric pressure, such as high-pressure dry air, are also included in the invention as a matter of course. That is, when the switchgear is hermetically sealed and the vacuum valve is surrounded by gas at a higher pressure than atmospheric pressure, there is a larger pressure difference between the interior and the surroundings of the vacuum valve compared to when the surroundings are at atmospheric pressure; consequently, buckling is easier to occur, so providing the vacuum valve shown in each embodiment is more effective.

In addition to the above, when a voltage class is particularly high as rated voltage, such as 72 kV or more, for example, a distance between the electrodes will be large at the time of connection/disconnection, in which case the present embodiment is especially suitable for a system susceptible to buckling.

### {Reference Signs List}

- 1: vacuum valve
- 2, 22: bellows
- 3: fixed conductor
- 4: fixed electrode
- 5: movable electrode
- 6: arc shield
- 7, 8: insulating tube
- 9: movable conductor
- 10: fixed side end plate
- 11: movable side end plate
- 15: switchgear
- 20: bus bar
- 21: cable head
- 23: grounding switch
- 24: CT
- 25: SF₆ gas-insulated switchgear
- 26: disconnecting switch

## Claims

1. A vacuum valve comprising: a fixed electrode and a movable electrode facing each other; a vacuum container containing the fixed electrode and the movable electrode and the interior thereof being in a vacuum state; and a bellows having a plurality of pleated structure for enabling movement of the movable electrode while maintaining the vacuum state in the vacuum container,
wherein the bellows is provided with a region without pleats or a region with low pleats.

2. The vacuum valve according to claim 1, wherein the thickness of the region without pleats or the region with low pleats in the bellows is thicker than that of a region with high pleats in the bellows.

3. The vacuum valve according to claim 1 or 2, wherein the bellows is disposed in the inner side of the vacuum container.

4. The vacuum valve according to any one of claims 1 to 3, wherein the region without pleats or the region with low pleats is provided near a longitudinal center of the bellows in the vacuum container.

5. The vacuum valve according to any one of claims 1 to 4, wherein the vacuum valve is applied with a voltage of 72 kV or more.

6. A switchgear comprising: the vacuum valve according to any one of claims 1 to 5, a bus bar for supplying electricity to the vacuum valve, and a cable for supplying the electricity from the vacuum valve to a load side.

7. The switchgear according to claim 6, wherein an interior of the switchgear is hermetically sealed with gas at a higher pressure than atmospheric pressure.
